# EUROPEAN PATENT APPLICATION

(11) **EP 2 584 861 A1**
(43) Date of publication of application: **24.04.2013**
(21) Application number: 11795750.6
(22) Date of filing: 15.06.2011
(51) Int. Cl.: H04W 76/02

(54) **MOBILE COMMUNICATION METHOD AND CORE NETWORK DEVICE**

(30) Priority: 12.10.2010 JP 2010230080; 18.06.2010 JP 2010140020
(71) Applicant: NTT DOCOMO, Inc., Chiyoda-ku Tokyo 100-6150 (JP)
(72) Inventor: NISHIDA, Katsutoshi, Tokyo 100-6150 (JP); TANAKA, Itsuma, Tokyo 100-6150 (JP)
(74) Representative: HOFFMANN EITLE
(86) International application number: PCT/JP2011/063633
(87) International publication number: WO 2011/158846

(57) **Abstract**

A mobile communication method according to the present invention includes a step A in which an SGSN/MME determines whether to allow a UE to turn into an always-on state in which a bearer for a UE is always established in a core network when "Attach Request" or "RA Update Request/TA Update Request" is received from the UE, and a step B in which the SGSN/MME transmits always-on information indicating the determination result to the UE by using "Attach Accept" or "RA Update Accept/TA Update Accept".

## Description

### TECHNICAL FIELD

The present invention relates to a mobile communication method and a core network apparatus.

### BACKGROUND ART

According to the 3GPP, in a GPRS (General Packet Radio Service) network and an EPS (Evolved Packet System) network, UEs (User Equipment, mobile stations) supporting GERAN (GSM EDGE Radio Access Network) /UTRAN (Universal Terrestrial Radio Access Network) scheme can turn into an "always-on state (Preservation state)" by starting Attach processing together with "PDP Context" setting processing regardless whether packets to be transmitted are present.

### PRIOR ART DOCUMENT

### NON-PATENT DOCUMENT

NON-PATENT DOCUMENT 1: 3GPP TS23.060
NON-PATENT DOCUMENT 2: 3GPP TS23.401

### SUMMARY OF THE INVENTION

However, in the above-described scheme, a network operator cannot instruct a UE to turn into the "always-on state".

This causes a first problem of increase in a load network in a case where a UE is set to turn into the always-on state, because the UE turns into the always-on state regardless of the policies of the network operator.

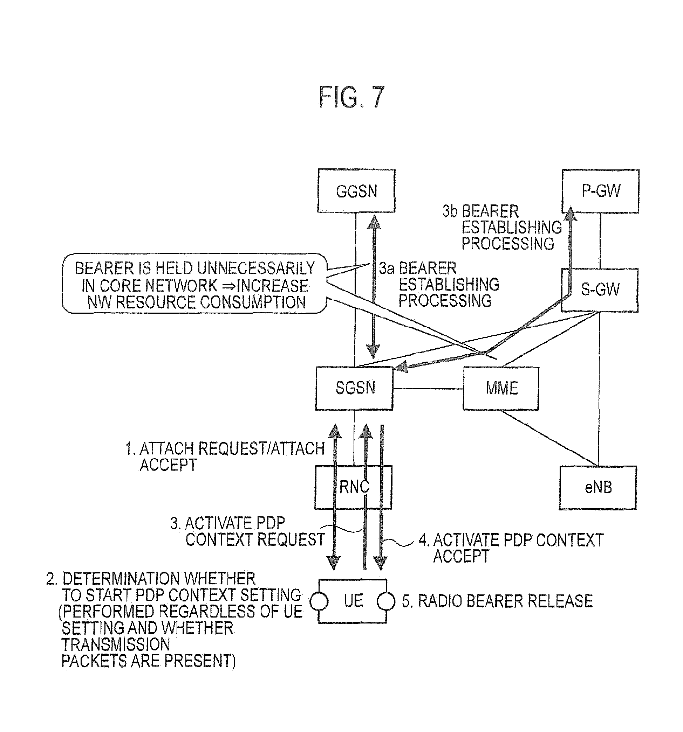

Hereinafter, referring to Figs. 7, the above-described problem is specifically described.

As shown in Fig. 7, at step 1, a UE transmits "Attach Request" to an SGSN (Serving GPRS Support Node) via a RNC (Radio Network Controller) and the SGSN transmits "Attach Accept" to the UE via the RNC.

The UE determines to start "PDP Context" setting processing regardless of whether packets to be transmitted are present at step 2, and transmits "Activate PDP Context Request" to the SGSN via the RNC at step 3.

At step 3a/3b, a bearer for UE is established in a core network. At step 4, the SGSN transmits "Activate PDP Context Accept" to the UE via the RNC.

At step 5, the UE releases a radio bearer for UE in a radio access network.

Here, at step 3a/3b, the above-described bearer for UE is established and unnecessarily held regardless of the policies of the network operator and, which results in increase in a network load.

In addition, there is a second problem as follows. When a UE supporting the E-UTRAN (Evolved Universal Terrestrial Radio Access Network) scheme and set not to be in the always-on state switches the radio access network where the UE camps from UTRAN to E-UTRAN, "Tracking Area (TA) Update Request" transmitted by the UE is rejected, and the UE has to carry out Attach again. Thus, there are problems that the network load is increased and the service cannot be temporarily provided to the UE.

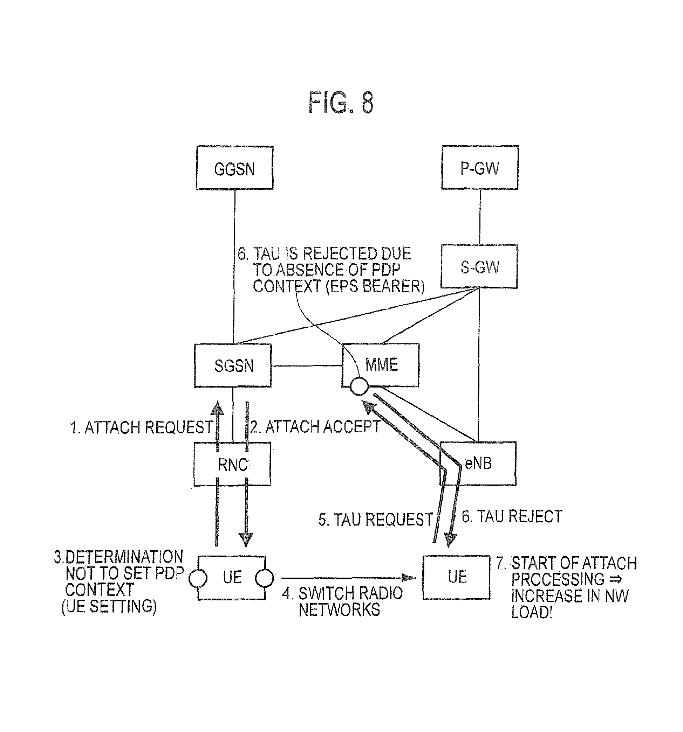

Hereinafter, referring to Fig. 8, the above-described problem is specifically described.

As shown in Fig. 8, at step 1, the UE transmits "Attach Request" to the SGSN via the RNC, and at step 2, the SGSN transmits "Attach Accept" to the UE via the RNC.

At step 3, the UE determines not to start the "PDP Context" setting processing.

The UE switches the radio access network where the UE camps from UTRAN to E-UTRAN at step S4, and transmits "TA Update Request" to an MME (Mobility Management Entity) via an eNB at step 5.

At step 6, since the MME does not manage the "PDP Context (EPS bearer)" for UE, the MME rejects the received "TA Update Request" and transmits "TA Update Reject" to the UE via the eNB.

At step 7, the UE starts Attach processing.

Accordingly, the network load is increased. In addition, the UE once turns into a Detach state, and is disabled to perform communications.

Accordingly, the present invention has been made in view of the above-described problems. An objective of the present invention is to provide a mobile communication method and a core network apparatus which can avoid increase in a network load and avoid a situation in which communications becomes temporality incapable, by the network side instructing a mobile station whether an always-on state is accepted.

A first characteristic of the present invention is summarized in that a mobile communication method, including a step A of determining, by a core network apparatus, whether to allow a mobile station to turn into an always-on state when receiving an Attach request signal or a location registration request signal from the mobile station, the always-on state being a state where a bearer for the mobile station is always established in a core network, and a step B of transmitting always-on information indicating the determination result from the core network apparatus to the mobile station by using an Attach response signal or a location registration response signal.

A second characteristic of the present invention is summarized in that a core network apparatus, wherein the core network apparatus is configured to determine whether to allow a mobile station to turn into an always-on state when receiving an Attach request signal or a location registration request signal from the mobile station, the always-on state being a state where a bearer for the mobile station is always established in a core network, and the core network apparatus is configured to transmit always-on information indicating the determination result to the mobile station by using an Attach response signal or a location registration response signal.

A third characteristic of the present invention is summarized in that a mobile station, wherein the mobile station is configured to receive always-on information from a core network apparatus, the always-on information indicating whether or not to allow an always-on state where a bearer for the mobile station is always established in a core network, is configured to determine whether to establish a bearer for the mobile station in the core network based on the always-on information, and is configured to start processing of establishing the bearer when determining to establish the bearer.

A fourth characteristic of the present invention is summarized in that a mobile communication method, including a step A of causing a core network apparatus to notify a subscriber management server that an Attach request signal or a location registration request signal is received from a mobile station, when receiving the signal from the mobile station, a step B of causing the subscriber management server to determine whether to allow the mobile station to turn into an always-on state in which a bearer for the mobile station is always established in a core network, a step C of causing the subscriber management server to transmit always-on acceptance information indicating the determination result in the step B to the core network apparatus, a step D of causing the core network apparatus to determine whether to allow the mobile station to turn into the "always-on state" based on the always-on acceptance information, and a step E of causing the core network apparatus to transmit always-on information indicating the determination result in the step D to the mobile station by using an Attach response signal or a location registration response signal.

A fifth characteristic of the present invention is summarized in that a core network apparatus, wherein the core network apparatus is configured to notify a subscriber management sever that an Attach request signal or a location registration request signal is received from a mobile station, when receiving the signal from the mobile station, is configured to receive always-on acceptance information from a subscriber management server, the always-on acceptance information indicating a determination result of whether to allow the mobile station to turn into an always-on state in which a bearer for the mobile station is always established in a core network, and determine whether to allow the mobile station to turn into the always-on state based on the always-on acceptance information, and is configured to transmit always-on information indicating the determination result in the core network apparatus to the mobile station by using an Attach response signal or a location registration response signal.

A sixth characteristic of the present invention is summarized in that a mobile communication method, including a step A of, when a determination result on whether to allow a mobile station to turn into an always-on state in which a bearer for a mobile station is always established in a core network is changed, causing a subscriber management server to transmit always-on acceptance information indicating the above change to a core network apparatus, a step B of causing the core network apparatus to determine whether to allow the mobile station to turn into the "always-on state" based on the always-on acceptance information, and a step C of causing the core network apparatus to release the bearer for the mobile station in the core network when it is determined that the mobile station is not to be allowed to turn into the always-on state.

### EFFECTS OF THE INVENTION

As described above, the present invention can provide a mobile communication method and a core network device which can avoid an increase in the network load and avoid a situation in which communications becomes temporality incapable, by the network side instructing a mobile station whether the always-on state is accepted.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a sequence diagram indicating an operation of the radio communication system according to the first embodiment of the present invention.
[Fig. 3] Fig. 3 is a sequence diagram indicating an operation of the radio communication system according to the first embodiment of the present invention.
[Fig. 4] Fig. 4 is a sequence diagram indicating an operation of the radio communication system according to the first embodiment of the present invention.
[Fig. 5] Fig. 5 is a sequence diagram indicating an operation of a radio communication system according to Modification 1 of the present invention.
[Fig. 6] Fig. 6 is a sequence diagram indicating an operation of a radio communication system according to Modification 2 of the present invention.
[Fig. 7] Fig. 7 is a drawing for illustrating an operation of a conventional mobile communication system.
[Fig. 8] Fig. 8 is a drawing for illustrating an operation of a conventional mobile communication system.

### MODES FOR CARRYING OUT THE INVENTION

### (Mobile Communication System according to First Embodiment of the Invention)

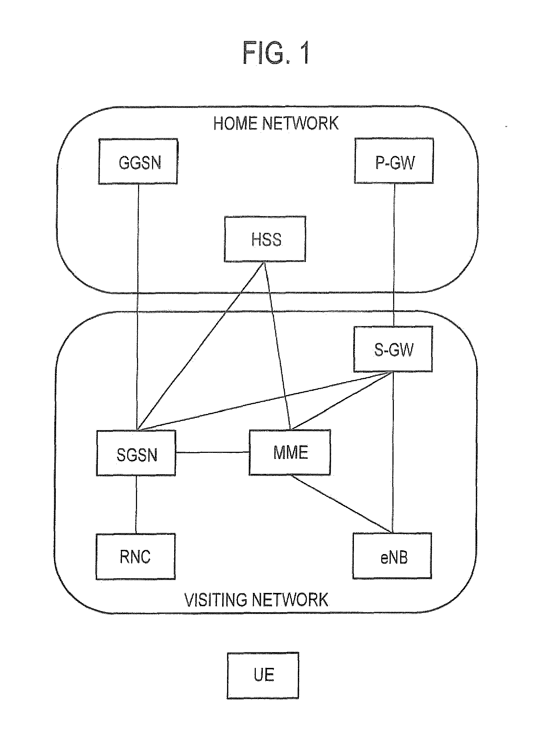

Referring to Figs. 1 to 4, a mobile communication system according to a first embodiment of the invention is described.

As shown in Fig. 1, a mobile communication system according to the present embodiment includes an HSS (Home Subscriber Server) , a GGSN (Gateway GPRS Support Node), an SGSN, a RNC, a NodeB (unillustrated), a P-GW (Packet Data Network Gateway), an S-GW (Serving Gateway), an MME, and an eNB.

Here, the HSS, GGSN, and P-GW are installed in a home network of the UE. The SGSN, RNC, MME and S-GW are installed in a network in which the UE is visiting. Note that the GGSN and the P-GW may be in the visiting network.

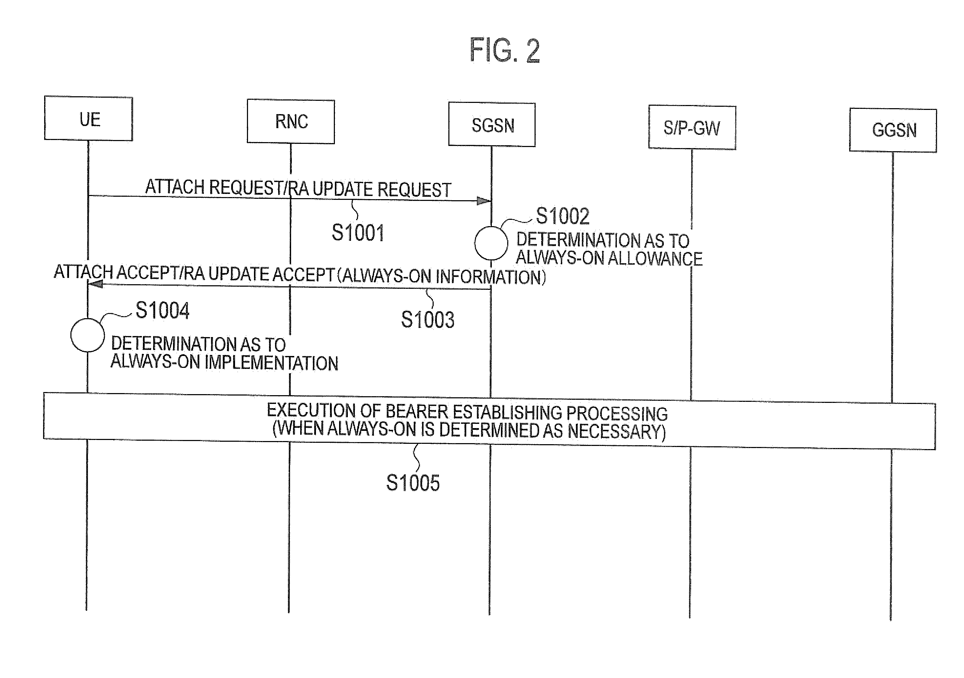

Hereinafter, referring to Figs. 2 to 4, operations of the mobile communication system according to the present embodiment are described.

First, the description is given by referring to Fig. 2 of a case where the UE performs Attach processing in UTRAN or performs location registration processing in UTRAN in which a radio access network is not switched in the mobile communication system according to the present embodiment.

As shown in Fig. 2, at step S1001, the UE transmits "Attach Request" or "RA Update Request" to the SGSN via the RNC.

At step S1002, the SGSN determines whether to allow the UE to turn into an "always-on state (Preservation state)" (or whether to make the UE transition into the instructed state), and creates always-on information containing such determination result. The UE determines whether to turn into the "always-on state (Preservation state)" based on the always-on information.

Note that, the "always-on state (Preservation state)" indicates a state where a bearer for UE is always established in a core network.

Here, based on at least one of a UE type (such as IMEI (International Mobile station Equipment Identity)/IMEISV (International Mobile station Equipment Identity Software Version)), UE subscriber information (such as contract information), a network (a radio access network/a core network) congestion state, a bearer connection destination (APN: Access Point Name) information, QoS (Quality of Service) information for UE, regulation information (Access Class Barring), UE communication performance, UE home network policy, UE visiting network policy, and the provision/absence of LTE scheme radio communication service (predetermined radio communication service), the SGSN may determine whether to allow the UE to turn into the "always-on state (Preservation state) " .

Also, the SGSN may determine whether to allow all UEs to turn into the "always-on state (Preservation state) " regardless of the above information.

Also, in place of the SGSN, the HSS may determine whether to allow the UE to turn into the "always-on state (Preservation state)".

At step S1003, the SGSN transmits "Attach Accept" or "RA Update Accept" containing always-on information indicating the determination result to the UE via the RNC.

For example, the always-on information may be information instructing "ON" or "OFF", information instructing "OFF", or information instructing "ON".

At step S1004, the UE determines whether to establish a bearer for UE in a core network, that is, whether to turn into the "always-on state (Preservation state)" based on the received always-on information.

Note that, in addition to the received always-on information, based on at least one of UE setting information, radio condition in the UE visiting network (for example, an available radio type), the UE home network policy, information stored in the USIM, the UE may determine whether to establish a bearer for UE in the core network, that is, whether to turn into the "always-on state (Preservation state)".

For example, when the always-on information instructs "ON" , the UE should establish a bearer for UE in the core network. That is, it determines that it should be in the "always-on state (Preservation state)".

On the other hand, when the always-on information instructs "OFF", the UE should not establish a bearer for UE in the core network. That is, it determines that it should not be in the "always-on state (Preservation state)".

Also, when the "Attach Accept" or "RA Update Accept/TA Update Accept" does not include the always-on information, the UE may determine so that it should be in the "always-on state (Preservation state)" or may determine so that it should not be in the "always-on state (Preservation state)".

When it is determined that it should be in the "always-on state (Preservation statue)", at step S1005, the UE transmits "Activate PDP context Request" to the SGSN via the RNC, so that processing to establish a bearer for UE in the core network (for example, a bearer among the SGSN and S-GW and P-GW or a bearer between the SGSN and the GGSN, or the like) is started.

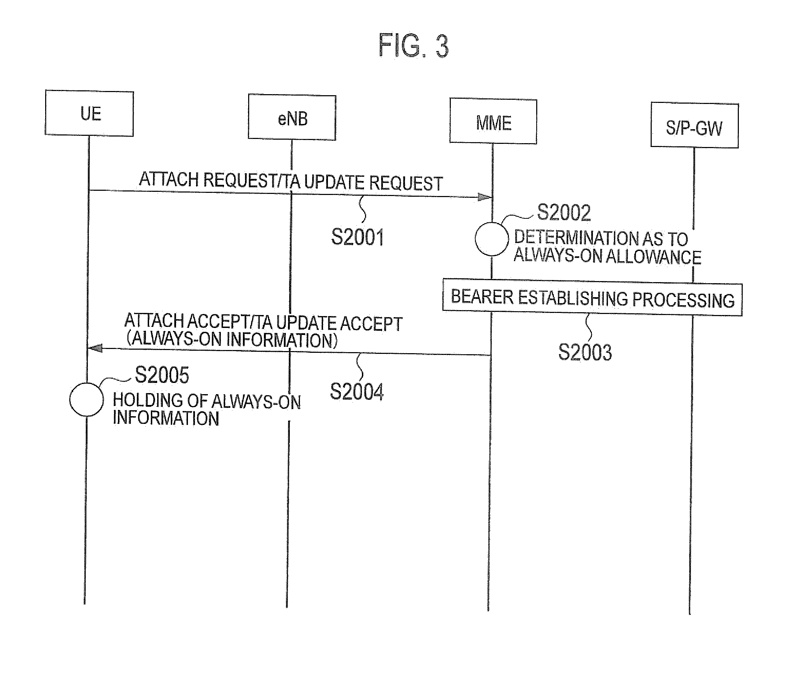

Second, the description is given by referring to Fig. 3 of an operation performed in a case where the UE performs Attach processing in E-UTRAN or performs location registration processing in E-UTRAN in which a radio access network is not switched in the mobile communication system according to the present embodiment.

As shown in Fig. 3, at step S2001, the UE transmits "Attach Request" or "TA Update Request" to the MME via the eNB.

At step S2002, the MME determines whether to allow the UE to turn into the "always-on state (Preservation state)" (or whether to make the UE transition into the instructed state), and creates always-on information containing such determination result. The UE determines whether to turn into the "always-on state (Preservation state)" based on the always-on information.

Note that, the "always-on state (Preservation state)" indicates a state where a bearer for UE is always established in a core network.

Here, based on at least one of UE type (such as IMEI/IMEISV), UE subscriber information (such as contract information), a network (radio access network/a core network) congestion state, bearer connection destination (APN) information, QoS information for the UE, regulation information (Access Class Barring), UE communication performance, UE home network policy, UE visiting network policy, and the provision/absence of LTE scheme radio communication service (predetermined radio communication service), the MME may determine whether to allow the UE to turn into the "always-on state (Preservation state)"

Also, the MME may determine whether to allow all UEs to turn into the "always-on state (Preservation state)" regardless of the above information.

Also, in place of the MME, the HSS may determine whether to allow the UE to turn into the "always-on state (Preservation state)".

At step S2003, regardless of such determination result, the bearer for UE (for example, a bearer among the MME and S-GW and P-GW) is established in the core network.

At step S2004, the MME transmits "Attach Accept" or "TA Update Accept" containing the always-on information indicating the determination result to the UE via the eNB.

For example, the always-on information may be information instructing "ON" or "OFF", information instructing "OFF", or information instructing "ON".

At step S2005, the UE holds the always-on information contained in the received "Attach Accept" or "TA Update Accept".

When the radio access network is switched to the UTRAN scheme or the GERAN scheme, the UE may be configured to determine whether to establish the bearer for the UE in the core network based on the above-described always-on information, and, based on such determination result, establish, hold or release such bearer.

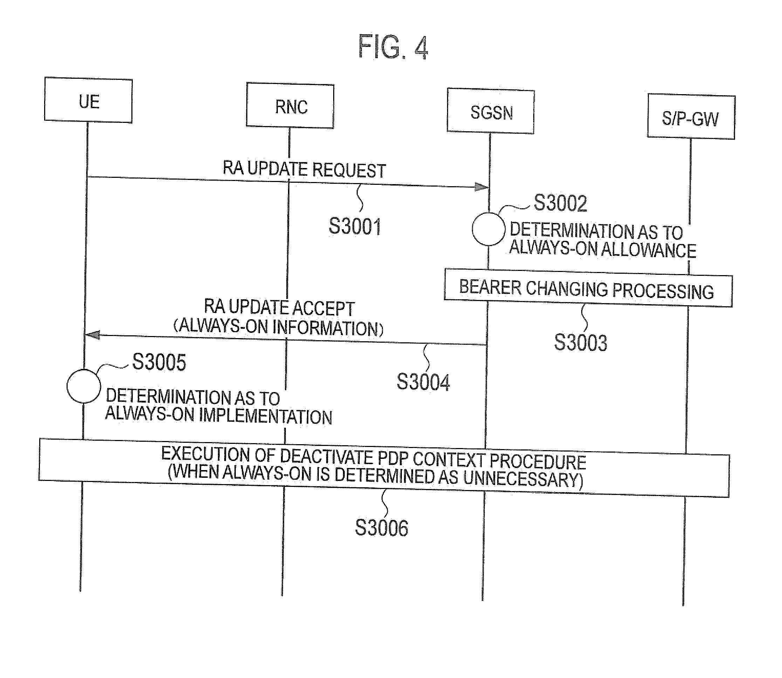

Third, the description is given by referring to Fig. 4 of an operation in a case where the UE performs location registration processing in UTRAN along with the switching of the radio network (E-UTRAN to UTRAN) in the mobile communication system according to the present embodiment.

As shown in Fig. 4, at step S3001, the UE transmits "Attach Request" or "RA Update Request" to the SGSN via the RNC.

At step S3002, the SGSN determines whether to allow the UE to turn into the "always-on state (Preservation state)".

At step S3003, based on the "PDP Context" acquired from the MME, processing of changing the bearer for UE (for example, a bearer among the MME, S-GW and P-GW, or the like) in the core network is performed.

At step S3004, the SGSN, transmits "Attach Accept or "RA Update Accept" containing the always -on information indicating the determination result to the UE via the RNC.

At step S3005, the UE determines whether to release the bearer for UE in the core network based on the received always-on information.

When it is determined that the bearer for the UE should be released in the core network, at step S3006, the UE transmits "Deactivate PDP Context Request" to the SGSN via the RNC, so that the processing of releasing the bearer for UE is started in the core network.

The mobile communication system according to the present embodiment can avoid an increase of the network load because whether to allow the UE to turn into "always-on state (Preservation state)" can be determined based on the policy of the network operator.

In addition, the mobile communication system according to the present embodiment can even avoid the necessity for the UE performing the Attach processing again when a radio access network where the UE camps is switched.

### (Modification 1)

A mobile communication system according to Modification 1 of the present invention is described below by paying attention to differences with the mobile communication system according to the above-described first embodiment.

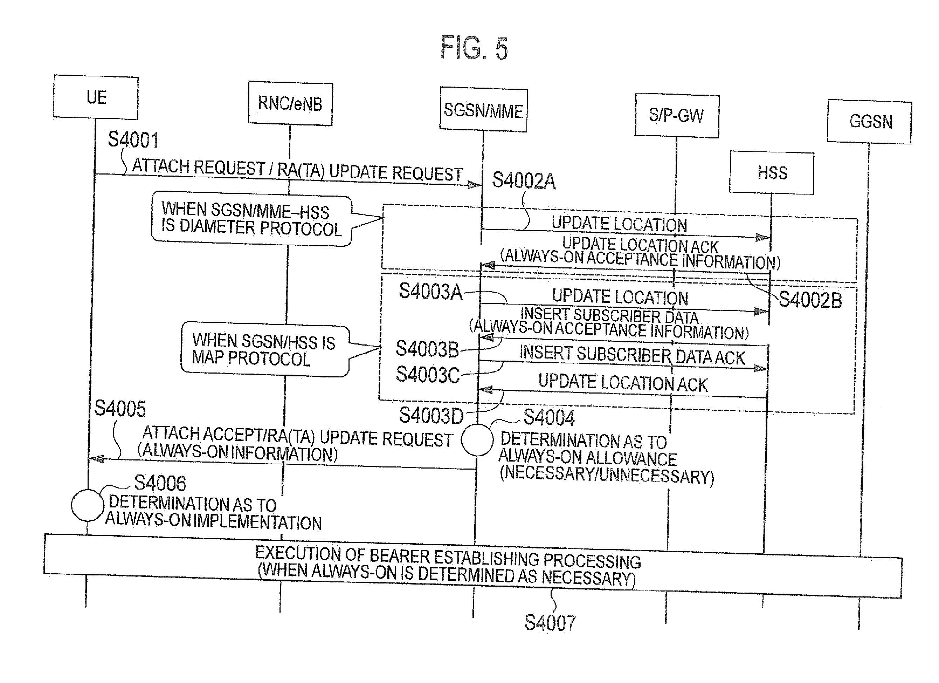

As shown in Fig. 5, at step S4001, a UE transmits "Attach Request" or "RA (TA) Update Request" to an SGSN/MME via a RNC/eNB.

Here, when a Diameter protocol is used between the SGSN/MME and the HSS, at step S4002A, the SGSN/ MME transmits "Update Location" to the HSS.

The HSS having received the "Update Location" determines whether to allow the UE to turn into an "always-on state (Preservation state)".

Here, based on at least one of a UE type (such as IMEI/UIMEISV), UE subscriber information (such as contract information), QoS information for UE, regulation information (Access Class Barring), UE communication performance, UE home network policy, UE visiting network policy, and the provision/absence of LTE scheme radio communication service (predetermined radio communication service), the HSS may determine whether to allow the UE to turn into the "always-on state (Preservation state)".

At step S4002B, the HSS transmits "Update Location" containing the always-on acceptance information indicating such determination result to the SGSN/ MME.

On the other hand, when a MAP protocol is used between the SGSN/MME and the HSS, at step S4003A, the SGSN/MME transmits "Update Location" to the HSS.

The HSS having received the "Update Location" determines whether to allow the UE to turn into the "always-on state (Preservation state) " .

Here, based on at least one of a UE type (such as IMEI/UIMEISV), UE subscriber information (such as contract information), QoS information for UE, regulation information (Access Class Barring), UE communication performance, UE home network policy, UE visiting network policy, and the provision/absence of LTE scheme radio communication service (predetermined radio communication service), the HSS may determine whether to allow the UE to turn into the "always-on state (Preservation state)".

At step S4003B, the HSS transmits "Insert Subscriber Data" containing the always-on acceptance information indicating such determination result to the SGSN/MME.

At step S4003C, the SGSN/MME transmits "Insert Subscriber Data Ack" to the HSS, and at step S4003D, the HSS transmits "Update Location Ack" to the SGSN/MME.

At step S4004, the SGSN/MME determines whether to allow the UE to turn into the "always-on state (Preservation state)".

At step S4005, the SGSN/ MME transmits "Attach Accept" or "RA (TA) Update Accept" containing the always-on information indicating the determination result to the UE via the RNC/eNB.

The UE maybe configured to determine whether to establish a bearer for UE in the core network at step S4006 based on the always-on information contained in the received "Attach Accept" or "RA (TA) Update Accept", and to establish, hold, or release the bearer based on the determination result at step S4007.

### (Modification 2)

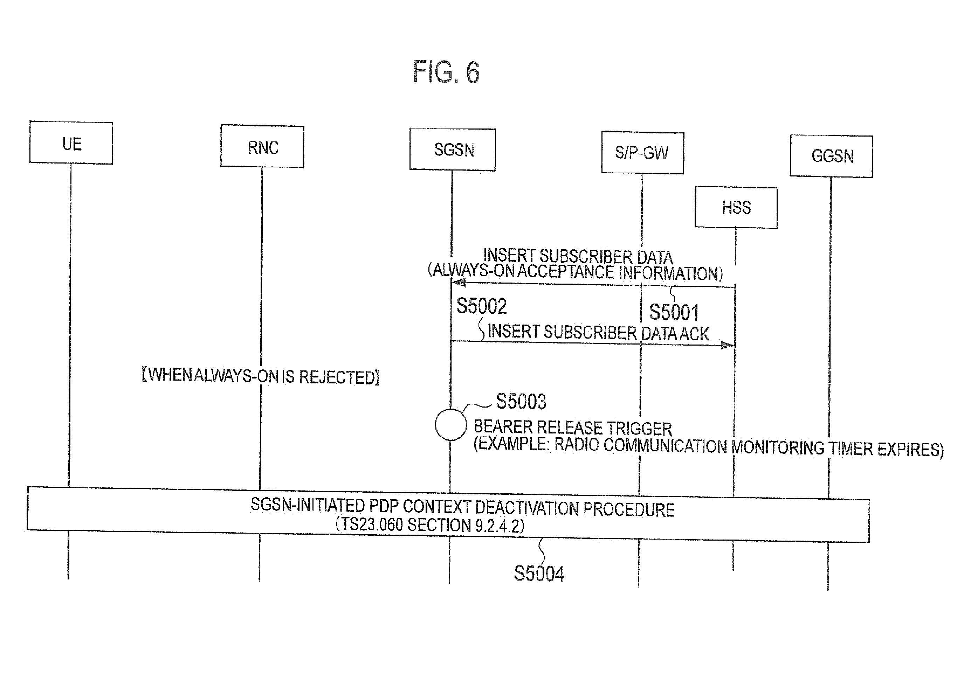

By referring to Fig. 6, a mobile communication system according to Modification 2 of the present invention is described below by paying attention to differences with the mobile communication system according to the above-described first embodiment.

As shown in Fig. 6, when the policy of the UE home network is changed, the HSS determines whether to allow the UE to turn into the "always-on state (Preservation state)" based on the policy resulting from the change, and transmits "Insert Subscriber Data" containing the always-on acceptance information indicating such determination result to the SGSN at step S5001.

At step S5002, the SGSN transmits "Insert Subscriber Data Ack" to the HSS.

Here, in a case where determination about the always-on state is changed from "hallowed" to "not allowed" based on the change of the always-on acceptance information received from the HSS, the SGSN detects a bearer releasing trigger at step S5003, and the SGSN releases the UE and the bearer for UE in the core network, in addition to the radio bearer for the UE, at step S5004 by performing the "SGSN-Initiated PDP Context Deactivation Procedure" regulated in the "3GPP TS 23.060 Section 9.2.4.2".

In the procedure, based on the information received from the HSS, the SGSN may create always-on information containing a newly-determined result of whether to allow the UE to turn into the "always-on state (Preservation state)" and notify the UE of the always-on information.

Specifically, the SGSN notifies the UE of the always-on information with "DEACTIVE PDP CONTEXT REQUEST (a bearer disconnection signal)".

In such a case, the UE determines whether to perform always-on based on the received always-on information.

Here, it is assumed as the bearer releasing trigger is such that a radio communication monitoring timer expires or the like.

The characteristics of the above-described embodiments may be expressed as follows.

A first characteristic of the present embodiment is a mobile communication method that includes a step A in which an SGSN/MME (a core network apparatus) determines whether to always establish a bearer for a UE in a core network, that is, whether to allow a UE (a mobile station) to turn into the "always-on state (Preservation state)" when "Attach Request (Attach request signal)" or "RA Update Request (location registration request signal)" is received from the UE and a step B in which the SGSN/MME transmits always-on information indicating the determination result to the UE with "Attach Accept (Attach response signal)" or "RA Update Accept/TA Update Accept (location registration response signal)".

The first characteristic of the present embodiment may include a step in which the UE determines whether to establish a bearer for UE in the core network based on the received always-on information and a step in which the UE starts processing of establishing the bearer for the UE when determining to establish the bearer for the UE.

In the first characteristic of the present embodiment, in the step A, based on at least one of a UE type, UE subscriber information, a network congestion information, bearer connection destination (APN) information, QoS information for the UE, regulation information (Access Class Barring), UE communication performance, a UE home network policy, a UE visiting network policy, and the provision/absence of LTE scheme radio communication service (predetermined radio communication service), the SGSN/MME may determine whether to allow the UE to turn into the "always-on state (Preservation state)".

In the first characteristic of the present embodiment, in the step A, the SGSN/MME may determine whether to allow all UEs to turn into the "always-on state (Preservation state)" regardless of the above information.

A second characteristic of the present embodiment is an SGSN/MME that is configured to determine whether to allow a UE to turn into an "always-on state (Preservation state)" when "Attach Request" or "RA Update Request/TA Update Request" is received from the UE and is configured to transmit always-on information indicating the determination result with "Attach Accept" or "RA Update Accept/TA Update Accept" to the UE.

In the second characteristic of the present embodiment, the SGSN/MME may be configured to determine whether to allow the UE to turn into the "always-on state (Preservation state)" based on at least one of a UE type, UE subscriber information, a network congestion state, bearer connection destination information, QoS information for the UE, regulation information, UE communication performance, UE home network policy, UE visiting network policy, and the provision/absence of LTE scheme radio communication service.

In the second characteristic of the present embodiment, the SGSN/MME may be configured to determine whether to allow all UEs to turn into the "always-on state (Preservation state)" regardless of the above information.

A third characteristic of the present embodiment is a UE that is configured to receive always-on information from the SGSN/MME, and is configured to determine whether to establish a bearer for a UE in a core network based on the always-on information, and is configured to start processing of establishing the bearer for the UE when determining to establish the bearer for the UE.

In the third characteristic of the present embodiment, the UE may be configured to start processing of releasing the bearer for the UE when it is determined that the bearer for the UE should not be established and the bearer for the UE is already established in the core network.

In the third characteristic, based on at least one of UE setting information, a radio state in the UE visiting network, a UE home network policy, and information stored in the USIM in addition to the always-on information, the UE may be configured to determine whether to establish the bearer for the UE in the core network.

A fourth characteristic of the present embodiment includes a step A in which the SGSN/MME notifies the HSS (Subscriber management server) that "Attach Request" or "RA Update Request/TA Update Request" is received from the UE, a step B in which the HSS determines whether to allow the UE to turn into an "always-on state (Preservation state)", a step C in which the HSS transmits always-on acceptance information indicating the determination result in step B to the SGSN/MME, a step D in which the SGSN/MME determines whether to allow the UE to turn into the "always-on state (Preservation state)" based on the always-on acceptance information, and a step E in which the SGSN/MME transmits always-on information indicating the determination result in the step D to the UE with "Attach Accept" or "RA Update Accept/TA Update Accept".

The fourth characteristic of the present embodiment may include a step in which the UE determines whether to establish a bearer for a UE in the core network based on the received always-on information and a step in which the UE starts processing of establishing the bearer for the UE when determining to establish the bearer for the UE.

In the fourth characteristic of the present embodiment, in the step D, the SGSN/MME may determine whether to allow the UE to turn into the "always-on state (Preservation state)" based on at least one of a UE type, UE subscriber information, a network congestion state, bearer connection destination information, QoS information for the UE, regulation information, a UE communication performance, a UE home network policy, a UE visiting network policy, and the provision/absence of LTE scheme radio communication service is present in addition to the always-on acceptance information.

In the fourth characteristic of the present embodiment, in the step A, the SGSN/MME may determine whether to allow all UEs to turn into the "always-on state (Preservation state)" regardless of the above information.

A fifth characteristic of the present embodiment is an SGSN/MME that is configured to notify the HSS that "Attach Request" or "RA Update Request/ TA Update Request" is received from a UE, receive always-on acceptance information indicating the determination result as to whether to allow the UE to turn into the always-on state from the HSS, and determine whether to allow the UE to turn into the "always-on state (Preservation state)" based on the always-on acceptance information, and transmit the always-on information indicating the determination result in the SGSN/MME to the UE with "Attach Accept" or "RA Update Accept/TA Update Accept".

In the fifth characteristic of the present embodiment, the SGSN/MME may be configured to determine whether to allow the UE to turn into the "always-on state (Preservation state)" based on at least one of a UE type, UE subscriber information, a network congestion state, bearer connection destination information, QoS information for the UE, regulation information, a UE communication performance, a UE home network policy, a UE visiting network policy, and the provision/absence of LTE scheme radio communication service in addition to the always-on acceptance information.

In the fifth characteristic of the present embodiment, the SGSN/MME may be configured to determine whether to allow all UEs to turn into the "always-on state (Preservation state)".

A sixth characteristic of the present embodiment is a mobile communication method that includes a step A in which when the determination result whether to allow the UE to turn into the "always-on state (Preservation state)" is changed, the HSS transmits the always-on acceptance information indicating that to the SGSN, a step B in which the SGSN determines whether to allow the UE to turn into the "always-on state (Preservation state)" based on the always-on acceptance information, and a step C in which the SGSN releases the bearer for the UE in the core network when determining not to allow the UE to turn into "always-on state (Preservation state)".

The sixth characteristic of the embodiment may include a step in which the SGSN transmits the always-on information indicating the determination result in the step B to the UE with "DEACTIVE PDP CONTEXT REQUEST (bearer disconnection signal)".

Note that operations of the above-described UE, eNB, MME, S-GW, RNC, SGSN, and GGSN may be implemented by hardware or may be implemented by a software module to be executed by a processor, or may be implemented in combination of the both.

The software module may be provided in any form of a recording medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

Such recording medium is connected with a processor so that the processor can read and write information on the recording medium. Also, such recording medium may be integrated on the processor. Or, such recording medium and the processor may be provided inside ASIC. Such ASIC may be provided in UE, eNB, MME, S-GW, P-GM, RNC, SGSN, or GGSN. Also, such recording medium and processor may be provided in UE, eNB, MME, S-GW, P-GW, RNC, SGSN, or GGSN as a discrete component.

As described above, the present invention is described in detail using the above-described embodiments. However, it will be apparent for those who are in the art that the present invention is not limited to the embodiments described herein. The present invention can be implemented as amended and modified aspects without departing from the scope and spirit thereof which is defined by the description of the scope of claims. Accordingly, the description herein intends only an illustration and does not mean any limitation to the invention.

### DESCRIPTION OF REFERENCE NUMERALS

- UE: Mobile station
- eNB: Radio base station
- MME: Mobility management node
- S-GW,: P-GW Gateway apparatus
- RNC: Radio network controller
- SGSN, GGSN: Packet exchanger
- HSS: Subscriber management server

## Claims

1. A mobile communication method, comprising:
a step A of determining, by a core network apparatus, whether to allow a mobile station to turn into an always-on state when receiving an Attach request signal or a location registration request signal from the mobile station, the always-on state being a state where a bearer for the mobile station is always established in a core network; and
a step B of transmitting always-on information indicating the determination result from the core network apparatus to the mobile station by using an Attach response signal or a location registration response signal.

2. The mobile communication method according to claim 1, comprising the steps of:
determining by the mobile station whether to establish a bearer for the mobile station in the core network based on the always-on information; and
starting processing of establishing the bearer by the mobile station when the mobile station determines to establish the bearer.

3. The mobile communication method according to claim 1,
wherein
in the step A, the core network apparatus determines whether to allow the mobile station to turn into the always-on state based on at least one of a type of the mobile station, subscriber information of the mobile station, a network congestion state, connection destination information of the bearer, QoS information corresponding to the mobile station, regulation information, communication performance of the mobile station, a home network policy of the mobile station, a visiting network policy of the mobile station, and provision/absence of a predetermined radio communication service.

4. The mobile communication method according to claim 1, wherein in the step A, the core network apparatus determines whether to allow all mobile station to turn into the always-on state.

5. A core network apparatus, wherein
the core network apparatus is configured to determine whether to allow a mobile station to turn into an always-on state when receiving an Attach request signal or a location registration request signal from the mobile station, the always-on state being a state where a bearer for the mobile station is always established in a core network, and
the core network apparatus is configured to transmit always-on information indicating the determination result to the mobile station by using an Attach response signal or a location registration response signal.

6. The core network apparatus according to claim 5, wherein the core network apparatus is configured to determine whether to allow the mobile station to turn into the always-on state based on at least one of a type of the mobile station, subscriber information of the mobile station, a network congestion state, connection destination information of the bearer, QoS information corresponding to the mobile station, regulation information, communication performance of the mobile station, a home network policy of the mobile station, a visiting network policy of the mobile station, and provision/absence of a predetermined radio communication service.

7. The core network apparatus according to claim 5, wherein
the core network apparatus is configured to determine whether to allow all mobile stations to turn into the always-on state.

8. A mobile station, wherein
the mobile station is configured to receive always-on information from a core network apparatus, the always-on information indicating whether or not to allow an always-on state where a bearer for the mobile station is always established in a core network,
is configured to determine whether to establish a bearer for the mobile station in the core network based on the always-on information, and
is configured to start processing of establishing the bearer when determining to establish the bearer.

9. The mobile station according to claim 8, wherein
the mobile station is configured to start processing of releasing the bearer, if the bearer is already established in the core network when it is determined that the bearer is not to be established.

10. The mobile station according to claim 8, wherein
the mobile station is configured to determine whether to establish a bearer for the mobile station in a core network based on at least one of setting information of the mobile station, a radio state in a visiting network of the mobile station, a home network policy of the mobile station, information stored in USIM in addition to the always-on information.

11. A mobile communication method, comprising:
a step A of causing a core network apparatus to notify a subscriber management server that an Attach request signal or a location registration request signal is received from a mobile station, when receiving the signal from the mobile station;
a step B of causing the subscriber management server to determine whether to allow the mobile station to turn into an always-on state in which a bearer for the mobile station is always established in a core network;
a step C of causing the subscriber management server to transmit always-on acceptance information indicating the determination result in the step B to the core network apparatus;
a step D of causing the core network apparatus to determine whether to allow the mobile station to turn into the "always-on state" based on the always-on acceptance information; and
a step E of causing the core network apparatus to transmit always-on information indicating the determination result in the step D to the mobile station by using an Attach response signal or a location registration response signal.

12. The mobile communication method according to claim 11, comprising the steps of:
causing the mobile station to determine whether to establish a bearer for the mobile station in a core network based on the always-on information; and
causing the mobile station to start processing of establishing the bearer when determining to establish the bearer.

13. The mobile communication method according to claim 11,
wherein
in the step D, the core network apparatus determines whether to allow the mobile station to turn into the always-on state based on at least one of a type of the mobile station, subscriber information of the mobile station, a network congestion state, connection destination information of the bearer, QoS information corresponding to the mobile station, regulation information, communication performance of the mobile station, a home network policy of the mobile station, a visiting network policy of the mobile station, and provision/absence of a predetermined radio communication service, in addition to the always-on acceptance information.

14. The mobile communication method according to claim 11, wherein in the step D, the core network apparatus determines whether to allow all mobile stations to turn into the always-on state.

15. A core network apparatus, wherein
the core network apparatus is configured to notify a subscriber management sever that an Attach request signal or a location registration request signal is received from a mobile station, when receiving the signal from the mobile station,
is configured to receive always-on acceptance information from a subscriber management server, the always-on acceptance information indicating a determination result of whether to allow the mobile station to turn into an always-on state in which a bearer for the mobile station is always established in a core network, and determine whether to allow the mobile station to turn into the always-on state based on the always-on acceptance information, and
is configured to transmit always-on information indicating the determination result in the core network apparatus to the mobile station by using an Attach response signal or a location registration response signal.

16. The core network apparatus according to claim 15, wherein the core network apparatus is configured to determine whether to allow the mobile station to turn into the always-on state, based on at least one of a type of the mobile station, subscriber information of the mobile station, a network congestion state, connection destination information of the bearer, QoS information corresponding to the mobile station, regulation information, a communication performance of the mobile station, a home network policy of the mobile station, a visiting network policy of the mobile station, and provision/absence of a predetermined radio communication service, in addition to the always-on acceptance information.

17. The core network apparatus according to claim 15, wherein the core network apparatus is configured to determine whether to allow all mobile stations to turn into the always-on state.

18. A mobile communication method, comprising:
a step A of, when a determination result on whether to allow a mobile station to turn into an always-on state in which a bearer for a mobile station is always established in a core network is changed, causing a subscriber management server to transmit always-on acceptance information indicating the above change to a core network apparatus;
a step B of causing the core network apparatus to determine whether to allow the mobile station to turn into the "always-on state" based on the always-on acceptance information; and
a step C of causing the core network apparatus to release the bearer for the mobile station in the core network when it is determined that the mobile station is not to be allowed to turn into the always-on state.

19. The mobile communication method according to claim 18, comprising the step of causing the core network apparatus to transmit always-on information indicating a determination result in the step B to the mobile station by using a bearer disconnection signal.
